# EUROPÄISCHE PATENTSCHRIFT

(11) **EP 0 398 028 B1**
(45) Veröffentlichungstag und Bekanntmachung des Hinweises auf die Patenterteilung: **07.01.1993**
(21) Anmeldenummer: 90107313.0
(22) Anmeldetag: 18.04.1990
(51) Int. Cl.: B60R 21/16

(54) **Sicherheitseinrichtung in Form eines Gaskissens für Kraftfahrzeuge**
Gas cushion safety device for vehicles
Dispositif de sécurité à sac gonflable pour véhicules

(30) Priorität: 17.05.1989 DE 3916011
(43) Veröffentlichungstag der Anmeldung: 22.11.1990
(73) Patentinhaber: DAIMLER-BENZ AKTIENGESELLSCHAFT, 70327 Stuttgart (DE)
(72) Erfinder: Henseler, Wolfgang, D-7400 Tübingen (DE)

(56) Entgegenhaltungen:
- FR-A- 2 141 336
- US-A- 3 802 719

## Beschreibung

Die Erfindung betrifft eine Sicherheitseinrichtung in Form eines Gaskissens für Kraftfahrzeuge nach dem Oberbegriff des Anspruchs 1.

Aus der DE-OS 35 05 927 ist ein beifahrerseitiges Gaskissen für Kraftfahrzeuge bekannt, das ab einer bestimmten Fahrzeugverzögerung vor dem Beifahrer aufgeblasen wird und mit einer Anprallfläche den Oberkörper eines nach vorne geschleuderten Fahrzeuginsassen auffängt. Dazu sollte sich das Gaskissen möglichst mit einer auf der Gegenseite angeordneten Abstützfläche an einer Windschutzscheibenfläche anlegen und abstützen können. Dabei ist zu beachten, daß sich ein üblicherweise symmetrisch ausgebildetes Gaskissen mit geraden Kanten an einer gewölbten Windschutzscheibenfläche, wie sie insbesondere in Seitenbereichen des Kraftfahrzeugs nahe der vorderen Wagensäule ausgeprägt auftritt, beim Anprall des Insassen abstoßen kann, wodurch ein Schwenkmoment um eine Hochachse in das Gaskissen eingeleitet wird, das eine an für sich quer zu einer Fahrzeuglängsachse ausgerichtete Anprallfläche für den Fahrzeuginsassen aus dieser günstigen Lage herausschwenkt und den Insassen in eine für diesen ungünstigere Richtung zurückwirft. Um diesen Effekt nicht auftreten zu lassen, ist das Gaskissen in der Ausführung entsprechend der DE-OS 35 05 927 asymmetrisch ausgebildet und an die Form der Windschutzscheibe angepaßt. Dies bedeutet einen hohen Fertigungsaufwand für das Gaskissen, dessen Einsatzmöglichkeit für jeden Fahrzeugtyp gesondert überprüft werden muß, da eine geänderte Windschutzscheibenwölbung umgehend auch eine Änderung der Gaskissenform erforderlich macht. Diese Änderung muß auch dann schon vorgenommen werden, wenn nur die Höhenlage eines Aufnahmebehälters zur Festlegung der Kissenhülle, z.B. eines Beifahrer-Gaskissens in einer Armaturentafel, verändert wird, da auch dann schon die Form der Gaskissenhülle von der der Windschutzscheibe abweicht, und die Vorteile der Anpassung nicht mehr bestehen.

In der DE-OS 17 80 304 sind veränderliche Öffnungen in Seitenteilen einer Gaskissenhülle vorgesehen, durch die darin ein im wesentlichen konstanter Druck aufrechterhalten werden soll, wenn ein Insasse auf die Kissenhülle drückt.

Der Erfindung liegt die Aufgabe zugrunde, für eine gattungsgemäße Sicherheitseinrichtung in Form eines Gaskissens eine herstellungsgünstige Anpassung an eine gewölbte Windschutzscheibenfläche zu erreichen, damit die Anprallfläche des Gaskissens für den Insassen annähernd in Fahrzeugquerrichtung ausgerichtet liegt.

Die Aufgabe wird durch die kennzeichnenden Merkmale des Anspruchs 1 gelöst.

Durch die über eine Gaskissenfläche asymmetrisch angeordneten Auslaßöffnungen, die im Bereich der stärksten Windschutzscheibenwölbung den größten Gasaustritt zulassen, ist erreicht, daß sich das Gaskissen bei seiner Belastung durch einen Insassen in diesem Bereich gezielt stärker zusammendrücken läßt und sich dadurch an die Scheibenwölbung anlegt, wodurch die gewünschte Ausrichtung der Anprallfläche für den Insassen auf der Gegenseite des Gaskissens in Fahrzeugquerrichtung eingehalten werden kann.

Dies hat auch zur Folge, daß das Gaskissen in einer Einheitsform gefertigt werden kann, welche sich ohne großen Aufwand durch entsprechende Variierung der Öffnungsquerschnitte der Auslaßöffnungen an verschieden gewölbte Windschutzscheibenabschnitte anpassen läßt.

Durch die gezielte Anordnung der Auslaßöffnungen in Seitenteilen oder an einer vom Insassen abgewandten Fläche des Gaskissens wird verhindert, daß das aus dem Gasgenerator ausströmende Gas gegen den Insassen geleitet wird.

Die Gegenstände der weiteren Ansprüche bilden vorteilhafte Ausbildungsmöglichkeiten der Gegenstände vorherstehender Ansprüche.

Ein Ausführungsbeispiel der Erfindung ist in der Zeichnung dargestellt.

Es zeigen:
Fig. 1 ein zwischen einer Armaturentafel und einem Beifahrer aufgeblasenes Gaskissen in einem Kraftwagen, und
Fig. 2 in Draufsicht die Anordnung aus Fig. 1 mit einer zusätzlich strichpunktiert gezeichneten, nicht erwünschten Lage eines Gaskissens.

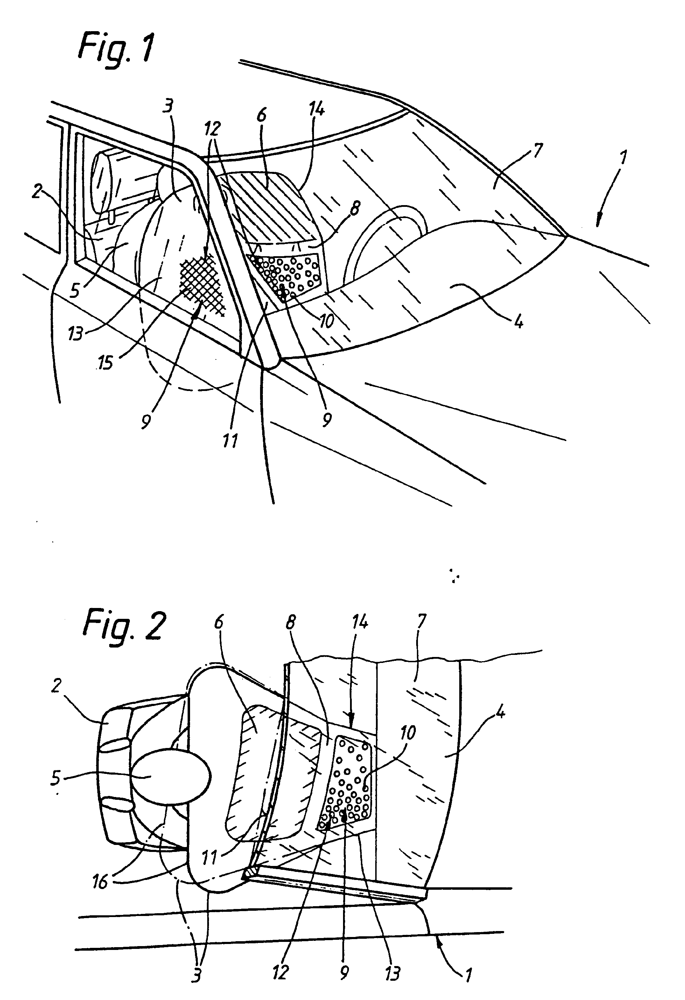

Fig. 1 zeigt einen Frontbereich eines Kraftwagens 1, in den beispielhaft vor einen Beifahrersitz 2 ein aufgeblasenes Gaskissen 3 eingezeichnet ist, das zwischen einer Armaturentafel 4 und einem Beifahrer 5 angeordnet ist, und den Beifahrer 5 vor einem Aufprall auf die Armaturentafel 4 schützt. Das Gaskissen 3 liegt mit einer Abstützfläche 6 an einer Windschutzscheibe 7 an und weist unterhalb dieser Abstützfläche 6 einen Gaskissenhüllenbereich 8 auf, in dem Auslaßöffnungen 9 in Form von mehreren kreisförmigen Durchläßen 10 ausgebildet sind, die nach dem Erreichen eines bestimmten Gaskisseninnendrucks den Austritt des Gases nach außen zulassen.

Diese Auslaßöffnungen 9 sind in einem seitlichen Bereich des Kraftwagens 1, in dem im Gegensatz zu einem mittleren Abschnitt der Windschutzscheibe 7 eine gegenüber einer Fahrzeugquerachse am stärksten gewölbte Windschutzscheibenfläche 11 ausgebildet ist, in ihrer Anzahl vermehrt, so daß sich hier insgesamt ein vergrößerter Öffnungsquerschnitt 12 für den Gasaustritt ergibt.

Ebenso ist es alternativ oder auch zusätzlich möglich, diese Auslaßöffnungen in Seitenteilen 13 und 14 des Gaskissens 3 anzuordnen, die wiederum nahe der stärksten Wölbung der Windschutzscheibenfläche 11, also im vorderen Abschnitt eines Seitenteils 13, 14, einen vergrößerten Öffnungsquerschnitt 12 bilden. Die Auslaßöffnungen 9 in den Seitenteilen 13 und 14 sind in einem Filtergewebeeinsatz 15 enthalten bzw. werden durch diesen ersetzt, der zum einen das aus einem nicht dargestellten Gasgenerator zur Füllung des Gaskissens 3 austretende Gas von festen Teilchen befreit, und der durch seine gegenüber den ansonsten üblichen Durchläßen 10 weniger durchlässige Struktur verhindert, daß das aus dem Gasgenerator ausströmende Gas zu schnell wieder seitlich aus dem Gaskissen 3 ausströmt.

Die erfindungsgemäße Ausbildung bzw. Anordnung der Auslaßöffnungen 9 bewirkt, wie in Fig. 2 dargestellt, daß ein gefülltes Gaskissen 3, das sich, wie strichpunktiert dargestellt, normalerweise nicht mit seiner geradlinigen Abstützfläche 6 an eine derart stark gewölbte Windschutzscheibenfläche 11 anpassen läßt, und dabei auch eine gegenüberliegende Anprallfläche 16 für den Beifahrer 5 aus einer für diesen optimalen Ausrichtung in Fahrzeugquerrichtung heraus verschwenkt, so daß der Beifahrer nach seinem Anprall an das Gaskissen 3 gegen die Fahrzeugmitte hin zurückgeworfen würde, sich nun durch den Druck des Beifahrers gegen die Anprallfläche 16 an die stark gewölbte Windschutzscheibenfläche 11 anpressen läßt, wodurch die Anprallfläche 16 in eine Ausrichtung in Fahrzeugquerrichtung gedrückt wird. Die nahe der am stärksten gewölbten Windschutzscheibenfläche 11 mit einem vergrößerten Öffnungsquerschnitt 12 ausgebildeten Auslaßöffnungen 9 bewirken also, daß sich das Gaskissen 3 in diesem Seitenbereich des Kraftwagens 1 durch die Masse des Beifahrers 5 weiter zusammendrücken und an die Windschutzscheibe 7 anpassen läßt. Eine weitere Ausbildungsmöglichkeit der Auslaßöffnungen 9 besteht darin, die Seitenteile 13 bzw. 14 aus unterschiedlich gasdurchläßigem Gewebe herzustellen, so daß das Seitenteil 13 nahe der am stärksten gewölbten Windschutzscheibenfläche 11 einen größeren Gasdurchtritt als das innenliegende Seitenteil 14 zulässt.

## Patentansprüche

1. Sicherheitseinrichtung für Kraftfahrzeuginsassen, mit einem Gaskissen (3), das ab einer bestimmten Fahrzeugverzögerung vor einem Fahrzeuginsassen aufgeblasen liegt, und das in seiner Hülle Auslaßöffnungen (9) aufweist, die ein teilweises Herauspressen des Gasvolumens zulassen, wobei das Gaskissen (3) mit einer Abstützfläche (6) an einer gewölbten Windschutzscheibenfläche (11) anliegt und auf einer Gegenseite eine Anprallfläche (16) für den Insassen aufweist, die annähernd in Fahrzeugquerrichtung ausgerichtet ist,
**dadurch gekennzeichnet,**
daß der Gaskissenbereich (12) nahe einer bezüglich einer Fahrzeugquerachse stärksten Wölbung der Windschutzscheibenfläche (11) den größten Gesamtöffnungsquerschnitt der Gasauslaßöffnungen (9) pro Flächeneinheit aufweist.

2. Sicherheitseinrichtung nach Anspruch 1 ,
**dadurch gekennzeichnet,**
daß die Auslaßöffnungen (9) gegen die Windschutzscheibe (7) gerichtet und/oder an Seitenteilen (13,14) des Gaskissens (3) in der Kissenhülle angeordnet sind.

3. Sicherheitseinrichtung nach einem der Ansprüche 1 oder 2,
**dadurch gekennzeichnet,**
daß die Seitenteile (13 bzw. 14) des Gaskissens (3) durch zwei unterschiedlich gasdurchlässige Kissenhüllengewebe gebildet sind.

4. Sicherheitseinrichtung nach einem der Ansprüche 1 oder 2,
**dadurch gekennzeichnet,**
daß die Auslaßöffnungen (9) in einem Filtergewebeeinsatz (15) enthalten sind.

5. Sicherheitseinrichtung nach Anspruch 4 ,
**dadurch gekennzeichnet,**
daß die Auslaßöffnungen (9) durch einen asymmetrisch zugeschnittenen Filtergewebeeinsatz (15) gebildet sind.

## Claims

1. Safety device for motor vehicle occupants having an airbag (3) which, from a specified vehicle deceleration onwards, is located inflated in front of a vehicle occupant, and which has outlet openings (9) in its cover which permit the gas volume to be partially forced out, the airbag (3) resting with a support surface (6) against a curved windscreen surface (11) and having on an opposite side an impact surface (16) for the vehicle occupant, said impact surface being approximately aligned in the vehicle transverse direction, characterized in that the airbag region (12) has the greatest overall cross-section of gas outlets (9) per surface unit near to a, in respect of a motor vehicle transverse axis, greatest curvature of the windscreen surface (11).

2. Safety device according to Claim 1, characterized in that the outlet openings (9) are arranged directed towards the windscreen (7) and/or in the bag cover on side parts (13, 14) of the airbag (3).

3. Safety device according to one of Claims 1 or 2, characterized in that the side parts (13 or 14) of the airbag (3) are formed by two bag covering fabrics with two different degrees of gas permeability.

4. Safety device according to one of Claims 1 or 2, characterized in that the outlet openings (9) are contained in a filter fabric insert (15).

5. Safety device according to Claim 4, characterized in that the outlet openings (9) are formed by a filter fabric insert (15) which is asymmetrically cut to size.

## Revendications

1. Dispositif de sécurité pour occupants de véhicules automobiles, comportant une vessie gonflable (3), qui est gonflée devant un occupant à partir d'un ralentissement déterminé du véhicule et qui comporte dans son enveloppe des orifices de décharge (9), qui autorisent une expulsion partielle du volume de gaz, la vessie gonflable (3) s'appliquant par une surface d'appui (6) contre une surface bombée (11) du pare-brise et comportant sur un côté opposé une surface (16) de réception de l'occupant, qui est orientée approximativement dans la direction transversale du véhicule, caractérisé en ce que la zone (12) de la vessie gonflable qui est située à proximité du plus fort bombement, par rapport à un axe transversal du véhicule, de la surface de pare-brise (11), présente la plus grande section totale d'ouverture des orifices de décharge de gaz (9) par unité de surface.

2. Dispositif de sécurité selon la revendication 1, caractérisé en ce que les orifices de décharge (9) sont orientés vers le pare-brise (7) et/ou sont situés sur les parties latérales (13,14) de la vessie gonflable (3) dans l'enveloppe de cette vessie.

3. Dispositif de sécurité selon l'une des revendications 1 ou 2, caractérisé en ce que les parties latérales (13 ou 14) de la vessie gonflable (3) sont constituées par deux tissus d'enveloppe de vessie ayant des perméabilités au gaz différentes.

4. Dispositif de sécurité selon l'une des revendications 1 ou 2, caractérisé en ce que les orifices de décharge (9) sont contenus dans un prisonnier (15) en tissu de filtrage.

5. Dispositif de sécurité selon la revendication 4, caractérisé en ce que les orifices de décharge (9) sont constitués par un prisonnier (15) en tissu de filtrage qui est découpé asymétriquement.
